# DEMANDE DE BREVET EUROPEEN

(11) **EP 0 897 209 A1**
(43) Date de publication de la demande: **17.02.1999**
(21) Numéro de dépôt: 97401934.1
(22) Date de dépôt: 13.08.1997
(51) Int. Cl.: H02J 13/00

(54) **Dispositif de transmission de commandes aux équipements d'une installation notamment d'une installation électrique et installation commandée par un tel dispositif**

(71) Demandeur: ELECTRICITE DE FRANCE Service National, 75008 Paris (FR)
(72) Inventeur: Lobert, Jean-Pierre, 92170 Vanves (FR)
(74) Mandataire: Obolensky, Michel

(57) **Abrégé**

Dispositif de transmission de commandes à un ensemble d'équipements d'une installation électrique notamment d'un logement, caractérisé en ce qu'il comporte des moyens (1,1a,1b,1c) d'émission et de réception de signaux de commande sous la forme d'ondes infrarouges ou radioélectriques modulées en liaison avec des moyens de transmission par courants porteurs des signaux de commande vers des équipements de l'installation à actionner, une logique (2) de décodage et de synchronisation des signaux électriques reçus par les moyens de réception (1a), une mémoire électriquement effaçable (3) de stockage d'un fichier contenant des commandes organisées selon la configuration de l'installation et des moyens (6) de liaison du dispositif avec des moyens de génération du fichier (F) des commandes organisées selon la configuration de l'installation.

## Description

La présente invention est relative à un dispositif de transmission de commandes pouvant être adapté à un processeur que l'on trouve dans les ordinateurs personnels PC ou dans les consoles de jeu.

Ce dispositif est destiné à être utilisé seul ou intercalé entre le port série du processeur et un équipement récepteur de commande pouvant se trouver sur des équipements électroménagers, des récepteurs ou des relais de commandes ou encore, la future borne multiservices EDF GDF services.

Le principe de transmission des signaux de données entre le dispositif suivant l'invention et le récepteur est fondé sur la modulation d'ondes infrarouges ou d'ondes radioélectriques de très haute fréquence, de l'ordre de 1,4 GHz.

L'invention a donc pour objet un dispositif de transmission de commandes à un ensemble d'équipements d'une installation électrique notamment d'un logement, comportant des moyens d'émission et de réception de signaux de commande sous la forme d'ondes infrarouges ou radioélectriques modulées en liaison avec des moyens de transmission par courants porteurs des signaux de commande vers des équipements de l'installation à actionner, caractérisé en ce qu'il comporte en outre une logique de décodage et de synchronisation de signaux électriques reçus par les moyens de réception, une mémoire électriquement effaçable de stockage d' un fichier contenant des commandes organisées selon la configuration de l'installation et des moyens de liaison du dispositif avec des moyens de génération du fichier des commandes organisées selon la configuration de l'installation, et en ce que les moyens d'émission et de réception de signaux de commande comprennent un récepteur de signaux d'identité relatifs à des zones de l'installation et provenant de moyens d' émission correspondants, un émetteur des signaux de commande vers lesdits moyens de transmission par courants porteurs et un modem reliant lesdits moyens d'émission et de réception à l'unité logique de décodage et de synchronisation;
- la mémoire électriquement effaçable est une mémoire EEPROM ou une mémoire FLASH;
- le dispositif comporte des boutons de manoeuvre destinés à commander l'émission par le dispositif de macrocommandes stockées dans le fichier se trouvant dans la mémoire et contenant chacune une série d'instructions destinées à des équipements particuliers de l'installation qui doivent être actionnés pour la placer dans une situation déterminée par la macrocommande;
- le dispositif est en outre relié de façon amovible à un microprocesseur assurant des commandes détaillées d'équipements de l'installation se trouvant dans une de plusieurs zones de ladite installation ou encore d'équipements d'intérêt général, le dispositif de transmission étant relié par ses moyens de liaison au microprocesseur et celui-ci étant associé à un logiciel de gestion de l'installation permettant au dispositif de transmission de transmettre des commandes destinées à des appareils spécifiques de l'installation;
- le microprocesseur fait partie d'une console de jeu et le logiciel de gestion est stocké dans une cartouche enfichée dans le boîtier de la console de jeu;
- le microprocesseur fait partie d'un microordinateur de type PC auquel est connecté le dispositif.

L'invention a également pour objet une installation destinée à être commandée par un dispositif de transmission du type défini ci-dessus, caractérisée en ce qu'elle comporte des relais à infrarouges ou à ondes radioélectriques de transmission des signaux de commande reçus du dispositif de commande aux appareils de l'installation, lesdits relais étant reliés auxdits appareils par une ligne à courants porteurs.

Suivant d'autres caractéristiques :
- l'installation comporte en outre un boîtier multiservices relié à la ligne à courants porteurs et à une ligne du réseau de distribution ou à une ligne téléphonique assurant la liaison par courants porteurs avec une agence de distribution, et pourvu d'un relais à infrarouges ou à ondes radioélectriques de communication avec le dispositif de transmission afin d'interpréter et de transmettre, par l'intermédiaire de la ligne à courants porteurs, aux appareils de l'installation, les instructions qui les concernent contenues dans les commandes qu'il reçoit du dispositif du transmission;
- le boîtier multiservices comporte une mémoire de stockage du fichier organisé selon la configuration de l'installation, et d'un fichier de conversion des macrocommandes en séries de commandes individuelles pour les équipements, et des moyens de connexion avec les moyens de liaison du dispositif de transmission pour charger le fichier organisé selon la configuration de l'installation dans la mémoire de stockage du fichier du boîtier multiservices;
- le boîtier multiservices est relié par la ligne du réseau de distribution ou par la ligne téléphonique, aux moyens de génération du fichier organisé selon la configuration de l'installation, le chargement du fichier étant assuré directement par l'intermédiaire de la ligne du réseau de distribution ou par la ligne téléphonique.

L'invention sera mieux comprise à la lecture de la description qui va suivre, donnée uniquement à titre d'exemple et faite en se référant aux dessins annexés, sur lesquels :
- la Fig.1 est un schéma synoptique du dispositif de transmission suivant l'invention;
- la Fig.2 est une vue schématique d'une console de jeu équipée d'un boîtier de commande contenant le dispositif de transmission de la figure 1;
- la Fig.3 représente le plan d'un logement équipé de moyens permettant l'utilisation du dispositif de transmission suivant l'invention; et
- la Fig.4 est un schéma représentant les moyens de chargement d'un fichier de configuration de l'installation électrique d'un logement dans le dispositif de transmission suivant l'invention et dans l'installation proprement dite.

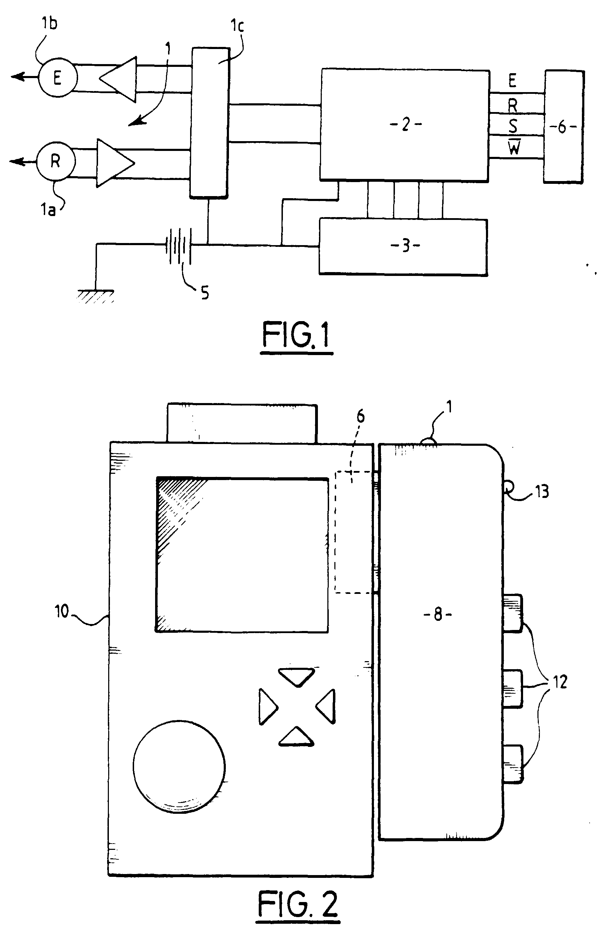

Le dispositif de transmission représenté sur la figure 1 comporte un module émetteur-récepteur infrarouge 1 comprenant un récepteur 1a, un émetteur 1b, un modem 1c associé, un module logique 2 de décodage précâblé ou programmé et de synchronisation des signaux électriques et une mémoire 3 électriquement effaçable telle qu'une mémoire EEPROM ou une mémoire FLASH.

Le dispositif comporte en outre une source d'alimentation comprenant une pile 5.

Il comporte de plus un connecteur 6 destiné à permettre de le relier à une console d'ordinateur.

Le connecteur 6 comprend une entrée E, une sortie R, une borne S1 de synchronisation d'horloge et une borne W de lecture-écriture.

Le dispositif est d'abord configuré avec un équipement tel qu'un ordinateur de bureau (non représenté) auquel il est branché par son connecteur 6.

A cet effet, il est placé sur le port série de l'ordinateur et une tension de commande est appliquée sur une des broches du dispositif.

L'ordinateur charge la mémoire 3 du dispositif avec les données de configuration requises pour les opérations de commande propres à l'équipement du logement auquel le dispositif est affecté et achève son intervention en inscrivant dans la mémoire 3, la clé d'identification du détenteur pour une authentification ultérieure de l'usager.

L'opération de configuration accomplie, la tension de commande est retirée et le dispositif attend d'être placé sur le port série d'un ordinateur de type PC ou d'une console de jeu portative.

Le module logique 2 surveille la conjonction suivante.

Un silence d'une durée minimale, par exemple de 100 ms et un code transmis en mode série sur la borne d'entrée pour entreprendre un échange de données sur le connecteur.

Ces deux conditions étant réunies, le module logique 2 identifie le code à l'aide de la clé d'authentification, puis livre la table de données stockée dans la mémoire 3, sur la broche de sortie de son interface série par le connecteur 6 avec la console informatique.

Si ces conditions ne sont pas réunies, le module logique 2 se contente de recopier et transmettre les informations reçues depuis la console vers la broche émission du module de transmission et inversement reproduire les signaux reçus par le module de transmission 1 sur la broche de réception.

Tout au plus, il adaptera dans les limites connues les vitesses de transmission et prendra en charge certains éléments de protocole de transmission pour les procédés normalisés (protocole RC5 de Philips).

Si l'énergie nécessaire au module de transmission 1 ne peut être délivrée par la console, le dispositif prend son énergie sur la pile 5.

De même, si la console informatique est du type console mobile de jeux ne disposant pas d'un rétro-éclairage pour l'écran à cristaux liquides, le dispositif utilise une partie de l'énergie de sa source d'énergie interne 5 pour offrir un éclairage latéral de l'écran.

L'utilisation du module représenté à la figure 1 est la suivante.

Le module est offert aux abonnés à l'électricité et au gaz dans le contexte d'une offre de services.

Le module est configuré chez le distributeur, par exemple à l'agence locale du distributeur d'électricité, par un agent chargé de la clientèle, lors d'un entretien avec le client au sujet de son équipement domestique et de ses besoins en télécommande.

L'agent collecte la liste des équipements pouvant être commandés par le dispositif soit directement, soit par l'intermédiaire du boîtier multiservices, organise l'installation par zones et propose au client des regroupements qui lui conviennent. Les informations corespodantes sont transcrites dans un fichier de configuration.

La configuration initiale est achevée en chargeant dans le module une clé d' authentification qui permettra à la console d'être reconnue par la borne multiservices du logement de l'abonné.

Plus tard, lorsqu'il s'agira de légères modifications de son environnement domestique ou des données de son confort, le client peut lui-même procéder dans son agence locale sur des PC en libre service à des aménagements de sa configuration qu'il transférera sur son dispositif de transmission.

Rentré chez lui, l'abonné utilise son dispositif pour des commandes à accès direct par actionnement de boutons portés par le dispositif ou place son module sur son PC ou sa console de jeu.

Il place sur la console par exemple, une cartouche de logiciel de gestion de l'équipement qui lui est fournie par l'agence locale et allume sa console.

Le logiciel inclus dans sa cartouche de jeu ou dans la mémoire du PC associé au dispositif de transmission initialise le dispositif et lit la configuration proposée ainsi que la clé d'authentification du logement et du client.

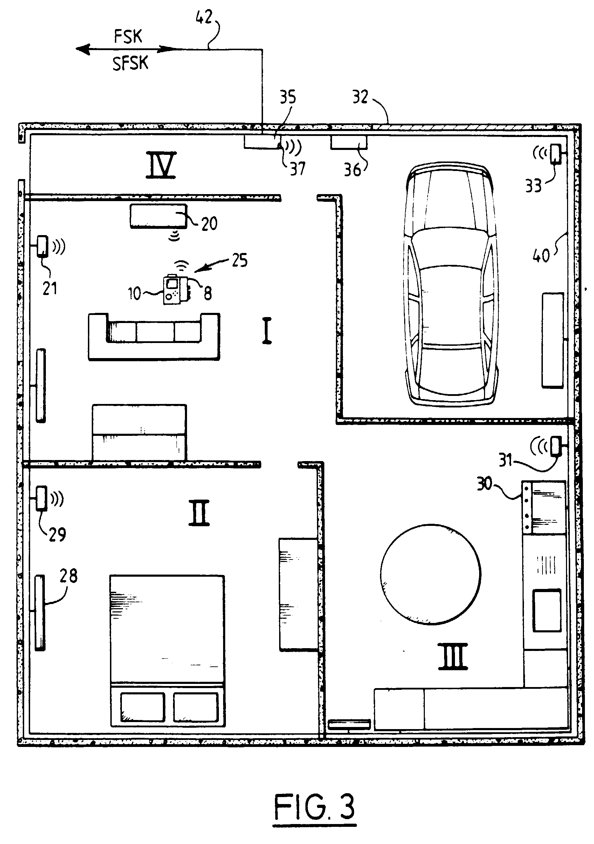

A l'aide de sa console, l'abonné peut de son logement interroger la borne multiservices équipant son installation et qui sera décrite en référence à la figure 3 pour consulter l'état de ses branchements d'énergie, la progression de ses consommations, la valorisation des consommations et lire les messages transmis à son intention par les prestataires de service.

Une fois entrée dans une pièce, la console reçoit l'information par des plots relais-émetteurs de l'emplacement de la console et propose à l'abonné les commandes, selon une ergonomie normalisée, des équipements placés dans cette pièce ou pouvant être contactés par l'intermédiaire de relais situés dans cette pièce.

Sur la figure 2, on a représenté le dispositif de transmission suivant l'invention sous la forme d'un boîtier 8 de commande connecté par son connecteur 6 à une console de jeu 10 contenant un microprocesseur (non représenté) qui est tout à fait suffisant pour assurer le fonctionnement du dispositif et munie d'une cartouche 11 enfichée contenant le logiciel de gestion de l'équipement d'un logement.

Le boîtier 8 comporte sa tête d'émission-réception à infrarouges 1 ainsi que des boutons de manoeuvre 12 pour des macrocommandes de fonctions et une diode électro-luminescente 13 de signalisation.

Ces macrocommandes de fonctions peuvent contenir des instructions pour l'installation correspondant à la situation créée par chaque macrocommande.

Si l'enfoncement d'un bouton de manoeuvre 12 indique l'absence de l'occupant pendant une courte période, 10 mn par exemple, l'équipement du logement recevra les instructions suivantes :
- maintien du confort,
- enclenchement des moyens anti-intrusion selon le périmètre et le volume des locaux du logement.

Si l'enfoncement d'un autre bouton de manoeuvre 12 indique que le logement est fermé pour l'été, les instructions seront alors :
- mise en sécurité gaz,
- alarme en périmètre et en volume,
- arrosage automatique des plantes ou du jardin,
- arrêt du chauffage.

L'enfoncement d'un autre bouton peut encore correspondre à la mise du logement dans les conditions de confort maximum, "cocooning".

Sur la figure 3, on a représenté le plan d'un logement pourvu d'un équipement de commande des appareils ménagers à l'aide du dispositif de l'invention.

Ce logement est du type divisé en quatre zones comportant chacune des appareils électriques à commander.

Il s'agit du salon I dans lequel est installé un téléviseur 20 pouvant être commandé par un relais 21 à infrarouges communiquant avec le dispositif de transmission suivant l'invention, représenté par la référence générale 25 et comprenant la console de jeu 10 et le dispositif de transmission 8 (Fig.2).

Une chambre II comporte par exemple un convecteur électrique 28 commandé par un relais à infrarouges 29 communiquant avec le dispositif de transmission.

Une cuisine III équipée d'appareils électroménagers 30 commandés par un relais à infrarouges associé 31.

Un garage IV ayant une porte 32 à ouverture électrique commandée par un relais à infrarouges 33.

Dans le couloir est disposé un boîtier multiservices 35 associé au compteur 36 de l'installation électrique et comportant des moyens récepteurs à infrarouges 37.

Les relais à infrarouges de l'installation sont reliés entre eux par une ligne 40 à courants porteurs CPL.

Le boîtier multiservices 35 est connecté à un concentrateur d'appels d'une agence de distribution (non représenté) par une ligne téléphonique ou par une ligne 42 du réseau de distribution, de transmission de signaux d'appel en modulation S-FSK et de signaux d' alarme en modulation FSK de la manière décrite notamment dans la demande de brevet français n° 96 02 568 déposée le 29 février 1996 par la Demanderesse.

Ainsi qu'on l'a indiqué plus haut, le boîtier multiservices 35 communique avec l'extérieur du logement par la ligne 42 de liaison avec le concentrateur d'appels situé dans une agence de distribution.

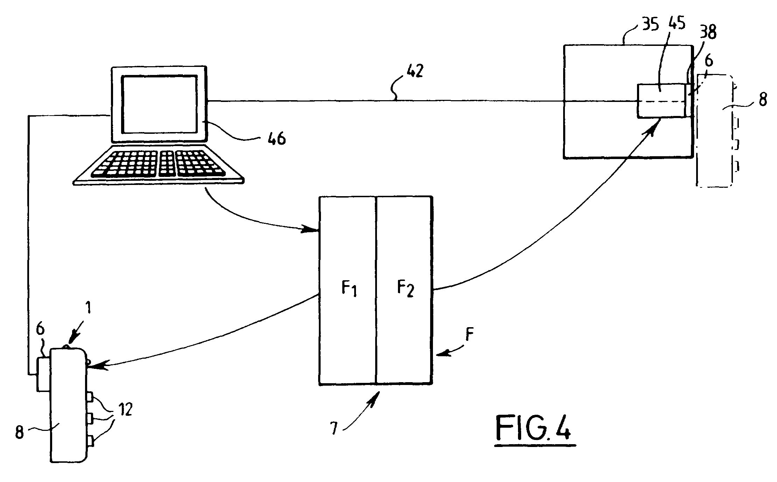

Comme représenté à la figure 4, il comporte de plus un connecteur 38 de liaison avec le connecteur 6 du dispositif de transmission.

Il communique également avec l'intérieur du logement :
a) par rayonnement infrarouge
b) par courants porteurs du réseau électrique local.

Pour permettre au logement de la figure 3 de recevoir des commandes à l'aide du dispositif suivant l'invention, on introduit dans un ordinateur situé par exemple dans une agence de distribution, avec l'assistance de l'occupant du logement, les éléments d' utilisation de ses équipements pouvant être commandés par l'intermédiaire du boîtier multiservices 35 et ceux pouvant être commandés directement par des signaux infrarouges, organisés selon les zones I à IV de l'installation.

Les éléments sont traités et édités sous la forme d'un fichier F représenté à la figure 4, qui comporte une zone F1 contenant les instructions pouvant être transmises par le dispositif de transmission lorsqu'il est associé à la console de jeu 10 et une zone F2 contenant des instructions pouvant être transmises par le dispositif de transmission seul.

Les données du fichier sont transmises à la mémoire de type EEPROM ou FLASH 3 du dispositif de transmission de la figure 1.

Le boîtier 8 du dispositif de transmission est alors utilisable seul pour émettre à l'aide de ses boutons de manoeuvre 12, des macrocommandes du type décrit plus haut.

Ces macrocommandes sont reçues par le récepteur à infrarouges 37 du boitier multiservices 35 et transmises par la ligne 40 à courants porteurs aux dispositifs de l'installation aptes à exécuter les différentes instructions contenues dans chacune des macrocommandes.

Lorsque le dispositif est associé à un microordinateur ou à la console de jeu 10 comme représenté à la figure 2, il assure des commandes détaillées d'équipements de l'installation se trouvant dans une des zones I à IV du logement de la figure 3 ou encore d'équipements d'intérêt général.

Chacune des quatres zones I à IV possède un relais à infrarouges 21,29,31,33 relié à la ligne 40 à courants porteurs.

Chaque relais émet un signal d'identité de la zone correspondante qui est reçu par le récepteur la du dispositif de transmission de la figure 1 et relaye les messages selon un protocole domotique (EHS, Echelon ou autre) entre le dispositif de transmission et la borne multiservices 35.

Ainsi, le dispositif de transmission suivant l'invention, seul ou associé à une console, peut émettre respectivement des macrocommandes générales ou des commandes spécifiques à chaque zone selon le protocole de commande directe de l'équipement en infrarouges ou encore pour une interprétation de la commande par l'intermédiaire du protocole domotique à travers ou sans le boîtier multiservices 35.

Les schémas des transmissions possibles sont les suivants :
a) Commande RC5 (Philips) > équipement
b) Commande RC6 + EHS > relais domotique EHS > équipement
c) Commande RC6 + EHS > relais domotique EHS > boitier multiservices EHS > équipements.

Le boîtier multiservices 35 est utilisé lorsqu'il y a des conversions à faire entre une macrocommande déclenchée par l'un des boutons de manoeuvre 12 du boîtier 8 du dispositif de transmission suivant l'invention et un jeu d'instructions qu'elle implique telles que l'enclenchement d'une alarme, une simulation de présence par actionnement programmé de l'éclairage, une mise en confort réduit.

Pour les transmissions a) et b), une confirmation est produite par le relais 21,29,31 ou 33 à destination du dispositif de transmission de l'invention.

Afin de transférer à l'installation équipant le logement de la figure 3, la configuration mise au point initialement par constitution du fichier stocké dans la mémoire 3 du dispositif, on transfère le fichier dans le boîtier multiservices 35 par connexion physique du boîtier 8 du dispositif de transmission par son connecteur 6 au boîtier multiservices 35 qui comporte à cet effet une mémoire 45 pour le fichier comme représenté à la figure 4.

Ce chargement du boîtier multiservices peut également être réalisé directement par courants porteurs à partir de l'ordinateur 46 de l'agence de distribution ayant servi à constituer le fichier mémorisé dans le dispositif de transmission suivant l'invention.

Selon une variante, le chargement du fichier F dans la mémoire 3 du dispositif de transmission est réalisé à partir d'un ordinateur PC détenu par l'utilisateur.

## Revendications

1. Dispositif de transmission de commandes à un ensemble d'équipements d'une installation électrique notamment d'un logement, comportant des moyens (1,1a,1b,1c) d'émission et de réception de signaux de commande sous la forme d'ondes infrarouges ou radioélectriques modulées en liaison avec des moyens (21,29,31,33,35) de transmission par courants porteurs des signaux de commande vers des équipements de l'installation à actionner, caractérisé en ce qu'il comporte en outre une logique (2) de décodage et de synchronisation des signaux électriques reçus par les moyens de réception (1a), une mémoire électriquement effaçable (3) de stockage d'un fichier (F) contenant des commandes organisées selon la configuration de l'installation et des moyens (6) de liaison du dispositif avec des moyens (46) de génération du fichier (F) des commandes organisées selon la configuration de l'installation et en ce que les moyens d'émission et de réception de signaux de commande comprennent un récepteur (1a) de signaux d'identité relatifs à des zones (I à IV) de l'installation et provenant de moyens d'émission correspondants (21,29,31,33), un émetteur (1b) des signaux de commande vers lesdits moyens (21,29,31,33,35) de transmission par fil et un modem (1c) reliant lesdits moyens d'émission et de réception à l'unité logique (2) de décodage et de synchronisation.

2. Dispositif de transmission suivant la revendication 1, caractérisé en ce que la mémoire électriquement effaçable (3) est une mémoire EEPROM ou une mémoire FLASH.

3. Dispositif de transmission suivant l'une quelconque des revendications 1 et 2, caractérisé en ce qu'il comporte des boutons de manoeuvre (12) destinés à commander l'émission par le dispositif de macrocommandes stockées dans le fichier (F) se trouvant dans la mémoire (3) et contenant chacune une série d' instructions destinées à des équipements particuliers de l'installation qui doivent être actionnés pour la placer dans une situation déterminée par la macrocommande.

4. Dispositif de transmission suivant l'une quelconque des revendications 1 à 3, caractérisé en ce qu'il est relié de façon amovible à un microprocesseur (10) assurant des commandes détaillées d'équipements de l'installation se trouvant dans une de plusieurs zones (I à IV) de ladite installation ou encore d'équipements d'intérêt général, le dispositif de transmission étant relié par ses moyens de liaison (6) au microprocesseur (10) et celui-ci étant associé à un logiciel (11) de gestion de l'installation permettant au dispositif de transmission de transmettre des commandes destinées à des appareils spécifiques de l'installation.

5. Dispositif de transmission suivant la revendication 4, caractérisé en ce que le microprocesseur (10) fait partie d'une console de jeu et le logiciel de gestion est stocké dans une cartouche (11) enfichée dans le boîtier (8) de la console de jeu.

6. Dispositif de transmission suivant la revendication 4, caractérisé en ce que le microprocesseur fait partie d'un micro-ordinateur de type PC auquel est connecté le dispositif.

7. Installation destinée à être commandée par un dispositif de transmission suivant l'une des revendications 1 à 6, caractérisée en ce qu'elle comporte des relais (21,29,31,33) à infrarouges ou à ondes radioélectriques de transmission des signaux de commande reçus du dispositif de commande aux appareils (28,30,32) de l'installation, lesdits relais étant reliés auxdits appareils par une ligne à courants porteurs (40).

8. Installation électrique suivant la revendication 7, caractérisée en ce qu'elle comporte en outre un boîtier multiservices (35) relié à la ligne (40) à courants porteurs et à une ligne (42) du réseau de distribution ou à une ligne téléphonique assurant la liaison par courants porteurs avec une agence de distribution et pourvu d'un relais (37) à infrarouges ou à ondes radioélectriques de communication avec le dispositif de transmission (8,10) afin d'interpréter et de transmettre, par l'intermédiaire de la ligne à courants porteurs (46) aux appareils de l'installation, les instructions qui les concernent contenues dans les commandes qu'il reçoit du dispositif du transmission.

9. Installation électrique suivant la revendication 8, caractérisée en ce que le boîtier multiservices (35) comporte une mémoire (45) de stockage du fichier (F) organisé selon la configuration de l'installation et d'un fichier de correspondance des macrocommandes et des commandes individuelles d'équipements.

10. Installation électrique suivant la revendication 9, caractérisée en ce que le boîtier multiservices comporte des moyens (38) de connexion avec les moyens de liaison (6) du dispositif de transmission pour charger le fichier (F) organisé selon la configuration de l'installation dans la mémoire (45) de stockage du fichier du boîtier multiservices (35).

11. Installation électrique suivant la revendication 9, caractérisée en ce que le boîtier multiservices (35) est relié par la ligne (42) du réseau de distribution ou par la ligne téléphonique, aux moyens (46) de génération du fichier (F) organisé selon la configuration de l'installation et du fichier de correspondance des macrocommandes et des commandes individuelles d'équipements, le chargement desdits fichiers étant assuré directement par l'intermédiaire de la ligne (42) du réseau de distribution ou de la ligne téléphonique.
